# EUROPÄISCHE PATENTSCHRIFT

(11) **EP 3 914 433 B1**
(45) Veröffentlichungstag und Bekanntmachung des Hinweises auf die Patenterteilung: **17.07.2024**
(21) Anmeldenummer: 20701714.6
(22) Anmeldetag: 20.01.2020
(51) Int. Cl.: B29C 41/00, B29C 41/20, B29C 41/22, B29C 41/36, B29C 41/46, B29C 43/18, B29C 43/34, B29C 43/00, B29C 43/52, B29C 67/08, B29C 67/04, B29K 105/00, B29L 31/50, B29L 31/00, B29C 41/28, B29C 43/20

(54) **VORRICHTUNG ZUR HERSTELLUNG VON VERSTEIFUNGSELEMENTEN AUS PULVERFÖRMIGEM MATERIAL**
DEVICE FOR PRODUCING REINFORCEMENT ELEMENTS FROM POWDERED MATERIAL
DISPOSITIF POUR PRODUIRE DES ÉLÉMENTS DE RENFORT À PARTIR D'UN MATÉRIAU EN POUDRE

(30) Priorität: 22.01.2019 DE 102019200741
(43) Veröffentlichungstag der Anmeldung: 01.12.2021
(73) Patentinhaber: Rhenoflex GmbH, 67065 Ludwigshafen (DE)
(72) Erfinder: KATZENBERGER, Thorsten, 67071 Ludwigshafen/Oggersheim (DE); JÄRGER, Henritte, 67259 Heuchelheim bei Frankenthal (DE); AMES, Sebastian, 68169 Mannheim (DE); SCHARFENBERGER, Gunter, 67227 Frankenthal (DE)
(74) Vertreter: dompatent von Kreisler Selting Werner - Partnerschaft von Patent- und Rechtsanwälten mbB
(86) Internationale Anmeldenummer: PCT/EP2020/051286
(87) Internationale Veröffentlichungsnummer: WO 2020/152103

(56) Entgegenhaltungen:
- DE-A1- 2 552 653
- DE-A1- 3 539 573
- DE-T2- 69 224 321
- DE-U1- 29 703 446

## Beschreibung

Die Erfindung betrifft eine Vorrichtung zur Herstellung von Versteifungselementen aus pulverförmigem Material. Bei den Versteifungselementen handelt es sich insbesondere um Versteifungselemente für Schuhe, Taschen, orthopädische Anwendungen oder dergleichen.

Zur Herstellung von Versteifungselementen aus pulverförmigem, zumindest teilweise schmelzbarem Material ist eine Vorrichtung aus WO2012/059367 bekannt. Diese weist einen Pulverbehälter auf in dem rieselfähiges, zumindest teilweise schmelzbares Pulver bevorratet ist. An einem Auslass des Pulverbehälters ist eine Schablone vorgesehen, durch die die Formen des Versteifungselements definiert wird. Mit Hilfe eines Schiebers kann der Auslass des Pulverbehälters geöffnet und geschlossen werden. Das Pulver rieselt durch die Schablone auf ein Transportband, wobei das Transportband synchron zum Öffnen und Schlie-βen des Schiebers getaktet ist. An eine derartige Pulverauftragsvorrichtung schließt sich ein Heizelement an, das durch Eindringen von Wärme und/oder Druck ein zumindest teilweises Aufschmelzen des Pulvers zur Herstellung des Versteifungselements bewirkt.

Eine Vorrichtung zur Herstellung von Versteifungselementen aus pulverförmigem Material mit den Merkmalen des Oberbegriffs des Anspruchs 1 ist aus DE 69224321 bekannt.

Aufgabe der Erfindung ist es eine Vorrichtung zur Herstellung von Versteifungselementen zu schaffen, mit der auf einfache Weise unterschiedliche Arten an Versteifungselementen hergestellt werden können.

Die Lösung der Aufgabe erfolgt erfindungsgemäß durch eine Vorrichtung zur Herstellung von Versteifungselementen mit den Merkmalen des Anspruchs 1.

Die erfindungsgemäße Vorrichtung zur Herstellung von Versteifungselementen für Schuhe, Taschen, orthopädische Anwendungen oder dergleichen weist eine erste Pulverauftragsvorrichtung auf. Die Pulverauftragsvorrichtung weist einen ersten Pulverbehälter für eine zumindest teilweise schmelzbare Pulvermischung auf. Die Pulvermischung wird auf einem Bereitstellungselement wie einem Transportband bereitgestellt. Bei dem Bereitstellungselement kann es sich auch um ein stationäres flächiges Element wie ein Aufnahmeblech oder dergleichen handeln. Die Pulverauftragsvorrichtung weist ferner am Auslass des Pulverbehälters eine Schablone auf, um eine Grundform eines herzustellenden Versteifungselements festzulegen. Über die Schablone wird somit eine insbesondere vorgegebene Menge an Pulvermischung auf dem Bereitstellungselement in einer Grundform aufgebracht. Die Pulvermenge kann durch einen Schieber oder eine andere Dosiervorrichtung festgelegt werden. Die Pulvermischung kann aus mehreren Pulvern unterschiedlichen Materials, unterschiedlicher Größe etc. zusammengesetzt sein. Zumindest eines der Pulvermaterialien ist schmelzbar.

Ferner weist die erfindungsgemäße Vorrichtung eine der Pulverauftragsvorrichtung nachgelagerte erste Verbindungseinrichtung auf. Mit Hilfe der Verbindungseinrichtung wird somit in einem auf den Pulverauftrag nachfolgenden Schritt ein Verbinden des Pulvers durchgeführt. Die erste Verbindungseinrichtung kann beispielsweise ein Heizelement aufweisen, um ein Anschmelzen oder Aufschmelzen des zumindest teilweise schmelzbaren Pulvermaterials zu bewirken. Mit Hilfe einer ersten Verbindungseinrichtung könnte auch ein Fluid zu einer zumindest losen Verbindung des Pulvers auf dieses aufgebracht werden. Die erste Verbindungseinrichtung ist vorzugsweise derart ausgebildet, dass sie der Pulvermischung zum An- oder Aufschmelzen zumindest eines Bestandteils der Pulvermischung Wärme zuführt. Die Wärmezufuhr kann bspw. durch einen Laser, Wärmestrahlung einer Lampe und/oder ein anderes Heizelement wie eine Heizplatte oder einen Heizstempel in das Material eingebracht werden.

Der ersten Verbindungseinrichtung ist erfindungsgemäß eine zweite Pulverauftragsvorrichtung nachgelagert. Nach einem zumindest losen Verbinden der Pulvermischung durch die erste Verbindungseinrichtung wird mit Hilfe der zweiten Pulverauftragsvorrichtung eine weitere Pulvermischung bereitgestellt. Entsprechend der ersten Pulverauftragsvorrichtung weist auch die zweite Pulverauftragsvorrichtung einen Pulverbehälter und eine am Auslass des Pulverbehälters befindliche Schablone auf. Von der zweiten Pulverauftragsvorrichtung wird Pulver derart bereitgestellt, dass es zumindest teilweise auf der Grundform angeordnet ist und so dass eine durch die zweite Pulverauftragsvorrichtung aufgebrachte Pulverschicht die durch die erste Pulverauftragsvorrichtung erzeugte Schicht zumindest teilweise überdeckt. Hierdurch ist es auf einfache Weise möglich ein Verstärkungselement mit unterschiedlich dicken Bereichen herzustellen. Der zweite Pulverbehälter der zweiten Pulverauftragsvorrichtung kann mit dem ersten Pulverbehälter identisch sein, so dass mittels der zweiten Pulverauftragsvorrichtung die Pulvermischung aus dem ersten Pulverbehälter bereitgestellt wird. Ggf. kann ein zusätzliches Pulvermaterial beigemischt werden, so dass sich die Materialzusammensetzungen der von der zweiten Pulverauftragsvorrichtung bereitgestellten Pulvermischung von derjenigen unterscheidet, die durch die erste Pulverauftragsvorrichtung bereitgestellt wurde. Bevorzugt ist es jedoch, dass zwei gesonderte Pulverbehälter vorgesehen sind, so dass auf einfache Weise auch unterschiedliche Pulvermischungen in unterschiedlicher Zusammensetzung und unterschiedlicher Rieselfähigkeit und dergleichen bereitgestellt werden können.

Des Weiteren weist die erfindungsgemäße Vorrichtung zur Herstellung von Versteifungselementen eine der zweiten Pulverauftragsvorrichtung nachgelagerte zweite Verbindungseinrichtung auf. Die zweite Verbindungseinrichtung dient zum Verbinden der auf dem Bereitstellungselement in der vorläufigen Endform vorgesehenen Pulvermischung. Die vorläufige Endform des herzustellenden Versteifungselements wird durch die zweite Pulverauftragsvorrichtung definiert.

Durch die zweite Verbindungseinrichtung erfolgt sodann ein vorzugsweise vollständiges Verbinden des Pulvermaterials. Dies erfolgt vorzugsweise wiederum durch Einbringen von Wärme und/oder Druck, so dass vorzugsweise alle schmelzfähigen Bestandteile der Pulvermischung aufschmelzen und einen festen Verbund bilden. Wie auch die erste Verbindungseinrichtung, ist es bevorzugt, dass auch die zweite Verbindungseinrichtung Heizelemente aufweist. Bei der zweiten Verbindungseinrichtung ist es besonders bevorzugt, dass die Heizelemente Heizstempel aufweisen. Die Heizstempel sind derart ausgebildet, dass sie nicht nur Wärme in die aufzuschmelzende Pulvermischung einbringen, sondern auch Druck ausgeübt wird. Vorzugsweise weisen die Heizstempel eine Ausnehmung auf, die komplementär zu der Außenform des herzustellenden Versteifungselements ist. Somit wird durch den Stempel die Endform des Versteifungselements definiert. In besonders bevorzugter Ausführungsform weist die zweite Verbindungseinrichtung mindestens ein Heizelement und mindestens einen Heizstempel auf. Durch das Heizelement, wie einen Ofen oder dergleichen, erfolgt ein Erwärmen der Pulvermischung, so dass zumindest schmelzfähige Bestandteile der Pulvermischung an- bzw. aufgeschmolzen werden. Durch die vorzugsweise zu mehreren sich anschließenden Heizstempel erfolgt ein insbesondere vollständiges Aufschmelzen der schmelzfähigen Bestandteile der Pulvermischung und ein Definieren der Endform des Versteifungselements.

Die Rieselfähigkeit der verwendeten Pulvermischung liegt vorzugsweise im Bereich von 20 bis 30 sec., gemessen mit einer 10 mm Düse nach EN ISO 6186.

Erfindungsgemäßs ist zwischen der ersten Pulverauftragsvorrichtung und der ersten Verbindungseinrichtung und/oder zwischen der ersten Verbindungseinrichtung und der zweiten Pulverauftragsvorrichtung eine Anordnungsvorrichtung vorgesehen. Die Anordnungsvorrichtung, bei der es sich beispielsweise um einen Roboterarm (Pick and Place) oder dergleichen handeln kann, dient zur Anordnung von Zwischenelementen auf die durch die erste Pulverauftragsvorrichtung auf das Bereitstellungselement aufgebrachte Pulvermischung. Hierbei können Zwischenelemente entweder vor und/oder nach der ersten Verbindungseinrichtung aufgebracht werden.

Bei den Zwischenelementen kann es sich beispielsweise um Gewebe, Textilmaterialien, Textilgewebe oder dergleichen handeln. Ebenso können Zwischenelemente in Gitterstrukturen oder Gitterelemente, die insbesondere im 3-D-Druckverfahren hergestellt wurden, angeordnet werden. Auch können durch Sprühverfahren Zwischenelemente hergestellt bzw. auf der bereits auf dem Bereitstellungselement vorgesehenen Pulvermischung angeordnet bzw. aufgesprüht werden. So können entsprechende Strukturen durch Aufsprühen von Pulver oder anderen Materialien hergestellt werden. Die Zwischenelemente dienen insbesondere zur zusätzlichen Versteifung der Versteifungselemente. Insbesondere handelt es sich bei den Zwischenelementen um Elemente, in die die aufschmelzende Pulvermischung eindringt. Die insbesondere flächig ausgebildeten Zwischenelemente können hierbei die Oberseite des in einer Grundform auf dem Bereitstellungselement bereitgestellten Pulvers teilweise oder vollständig bedecken. Auch können mehrere, sich teilweise auch überdeckende Zwischenelemente angeordnet werden. Insofern kann die Anordnungsvorrichtung beispielsweise einen oder mehrere Roboterarme oder dergleichen aufweisen.

Bei einer weiteren besonders bevorzugten Weiterbildung der erfindungsgemäßen Vorrichtung zur Herstellung von Versteifungselementen ist zwischen der ersten Verbindungseinrichtung und der zweiten Pulverauftragsvorrichtung und/oder zwischen der ersten Pulverauftragsvorrichtung und der ersten Verbindungseinrichtung eine Anordnungsvorrichtung zur Anordnung von Zusatzelementen vorgesehen. Bei den Zusatzelementen handelt es sich vorzugsweise um Speicherelemente wie aktive oder passive Chips, insbesondere RFID-Chips. Derartige Zusatzelemente können zusätzlich oder anstelle von Zwischenelementen vorgesehen werden.

Erfindungsgemäß kann die Vorrichtung zur Herstellung von Versteifungselementen somit zusätzlich zu den beiden Pulverauftragsvorrichtungen und den beiden Verbindungseinrichtungen an unterschiedlichen Stellen Anordnungsvorrichtungen zur Anordnung von Zwischenelementen und/oder zur Anordnung von Zusatzelementen aufweisen. Es ist somit ein modularer Aufbau bzw. eine modulare Verwendung der erfindungsgemäßen Vorrichtung zur Herstellung unterschiedlicher Versteifungselemente mit unterschiedlichen Eigenschaften möglich. Es sind insbesondere mehrschichtige Versteifungselemente mit unterschiedlichen Materialstärken, unterschiedlicher Materialzusammensetzung, unterschiedlichen Zwischenelementen und/oder unterschiedlichen Zusatzelementen auf einfache Weise herstellbar.

Bei einer bevorzugten Weiterbildung der Erfindung kann der zweiten Verbindungseinrichtung eine Verdichtungs- und/oder Kalibriereinrichtung nachgelagert sein. Eine derartige Verdichtungs- und/oder Kalibriereinrichtung kann auch in die zweite Verdichtungseinrichtung, bei der es sich beispielsweise um eine Heizeinrichtung handelt, integriert sein, bzw. mit dieser eine gemeinsame Station ausbilden. Durch eine derartige Vorrichtung kann insbesondere die Dicke des Produkts eindeutig kalibriert werden. Dies erfolgt insbesondere durch plastische Verformung des noch heißen Pulvermaterials bzw. des Pulvermaterials, das noch eine Temperatur aufweist, in der eine plastische Verformung möglich ist. Eine entsprechende Vorrichtung kann beispielsweise Walzen, Bänder, Stempel, Pressen oder dergleichen aufweisen.

Ferner ist es möglich, dass eine derartige Verdichtungs- und/oder Kalibriereinrichtung mit einer Kühleinrichtung kombiniert ist oder beispielsweise zwischen einer Heizeinrichtung eine Kühleinrichtung angeordnet ist.

Der zweiten Verbindungseinrichtung ist gegebenenfalls eine weitere Einrichtung, in bevorzugter Weiterbildung eine Beschichtungs- und/oder Metalldetektionseinrichtung nachgelagert. Mit Hilfe der Beschichtungseinrichtung kann beispielsweise ein Beschriften des Produkts durch einen Druckkopf, durch einen Laser oder dergleichen erfolgen.

Mit Hilfe einer Metalldetektionsrichtung kann beispielsweise ein Sortieren der hergestellten Produkte erfolgen. Des Weiteren ist es möglich, in diesem Bereich eine Einrichtung zur Qualitätskontrolle, insbesondere zur automatischen Qualitätskontrolle vorzusehen.

Bevorzugt ist es insbesondere in diesem Bereich eine Programmiereinrichtung vorzusehen, mit der es möglich ist programmierbare Zwischenelemente wie Chips oder dergleichen unmittelbar nach der Herstellung des Versteifungselements zu programmieren. Ferner kann in diesem Bereich eine Sortiereinrichtung und/oder eine automatische Entnahmeeinrichtung und/oder eine automatische Verpackungseinrichtung vorgesehen sein.

Das Bereitstellungselement, das vorzugsweise mindestens ein Förderband aufweist, kann ein oder mehrteilig ausgebildet sein. Insbesondere können die einzelnen Stationen, die vorzugsweise durch Förderbänder miteinander verbunden sind, linear hintereinander angeordnet sein, so dass eine einer langgestreckten Fertigungsstraße entsprechende Vorrichtung ausgebildet ist. Auch ist es möglich einzelne Stationen in einem Winkel zueinander und/oder einander gegenüberliegend anzuordnen. Es erfolgt somit ein im Wesentlichen, zumindest teilweise, kreisförmiges bzw. abgewinkeltes Anordnen der einzelnen Stationen. Hierdurch kann die erfindungsgemäße Vorrichtung an örtliche Gegebenheiten angepasst werden.

Insbesondere wenn das Bereitstellungselement Förderbänder aufweist, sind diese ggf. teflonbeschichtet. Dies ist insbesondere vorteilhaft, um ein Anhaften von Pulver zu vermeiden. Insbesondere an- oder aufgeschmolzenes Pulver würde an nicht beschichteten Transportbändern anhaften, wobei dies durch eine Teflonbeschichtung vermieden ist.

Bei einer bevorzugten Weiterbildung der Erfindung ist in der zweiten Verbindungseinrichtung eine Kühleinrichtung nachgelagert. Die Kühleinrichtung kann Kühlstempel aufweisen, so dass ein gezieltes Abkühlen der Versteifungselemente möglich ist. Anschließend an das Kühlen kann beispielsweise durch ein Laserprintverfahren eine Artikelnummer oder dergleichen auf das Versteifungselement aufgebracht werden. Hieran anschließend kann noch eine Vorrichtung zur Metalldetektion vorgesehen sein.

Nachfolgend wird die Erfindung anhand bevorzugter Ausführungsformen unter Bezugnahme auf die anliegenden Zeichnungen näher erläutert.

Es zeigen:
- Fig. 1: eine schematische, stark vereinfachte Seitenansicht einer ersten bevorzugten Ausführungsform der Vorrichtung zur Herstellung von Versteifungselementen und
- Fig. 2: eine stark vereinfachte Draufsicht einer zweiten Ausführungsform der Vorrichtung zur Herstellung von Versteifungselementen.

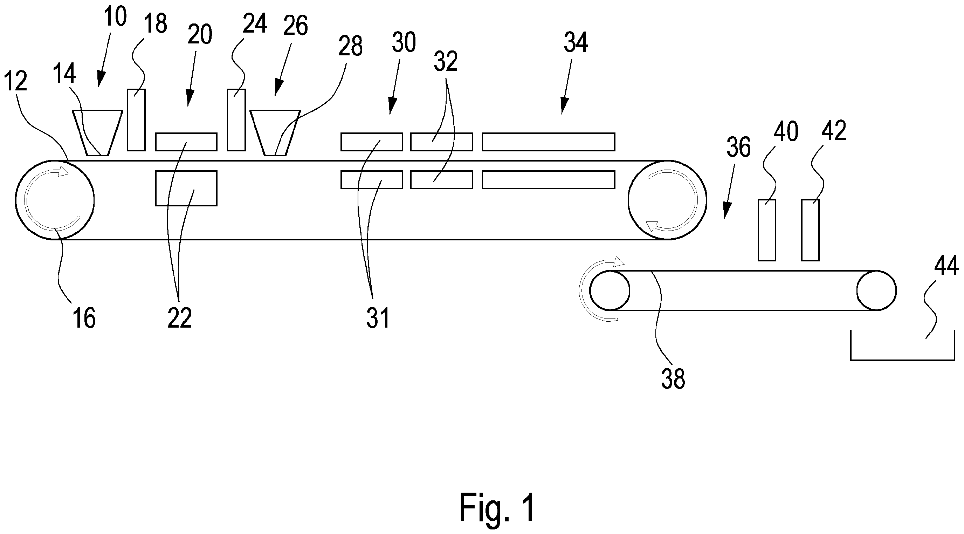

In der in Figur 1 dargestellten, stark vereinfachten schematischen Seitenansicht wird über eine erste Pulverauftragsvorrichtung 10 eine zumindest teilweise schmelzbare Pulvermischung bereitgestellt. Hierzu weist ein Pulverbehälter der Pulverauftragsvorrichtung 10 an einem Auslass 14 eine Schablone auf, um eine Grundform eines herzustellenden Versteifungselements zu definieren. Zur Festlegung der zu dosierenden Pulvermenge kann ein Schieber oder eine andere Dosiervorrichtung vorgesehen sein. Die Pulvermischung wird auf die Oberseite eines im dargestellten Ausführungsbeispiel als Transportband ausgebildeten Bereitstellungselements aufgebracht. Auf dem Transportband 12 ist somit ein herzustellendes Versteifungselement in Grundform vorgesehen.

In einer in Transportrichtung 16 der ersten Pulverauftragsvorrichtung nachgeordneten Anordnungsvorrichtung 18 können Zwischenelemente angeordnet werden. Als Zwischenelemente können auf der Oberseite der bereits aufgebrachten Pulverschicht Zwischenelemente wie Gewebe, Textilgewebe oder andere Elemente angeordnet werden.

Der Anordnungsvorrichtung 18, wiederum in Transportrichtung 16, nachgeordnet ist eine erste Verbindungseinrichtung 20 vorgesehen. Die Verbindungseinrichtung weist in dem dargestellten Ausführungsbeispiel Heizelemente 22 auf, die auf beiden Seiten des Transportbandes 12 vorgesehen sind. Durch die Heizelemente erfolgt ein zumindest teilweises Aufschmelzen der schmelzbaren Bestandteile der Pulvermischung, so dass ein zumindest loses Verbinden der Pulvermischung sichergestellt ist.

Der ersten Verbindungseinrichtung, wiederum in Transportrichtung 16, nachgelagert ist eine weitere Anordnungsvorrichtung 24. Mit dieser Anordnungsvorrichtung 24 können Zusatzelemente wie bspw. Speicherbauteile oder dergleichen auf der Oberseite der durch die erste Pulverauftragsvorrichtung 10 hergestellten Pulverschicht angeordnet werden. Hieran anschließend wird mit Hilfe einer zweiten Pulverauftragsvorrichtung eine weitere Schicht Pulvermischung auf die erste Pulverschicht aufgebracht. Die zweite Pulverauftragsvorrichtung weist vorzugsweise wiederum einen Pulverbehälter mit einer an einem Auslass 28 angeordneten Schablone auf. Die von der zweiten Pulverauftragsvorrichtung 26 aufgebrachte Pulverschicht überdeckt die von der ersten Pulverauftragsvorrichtung 10 aufgebrachte Pulverschicht zumindest teilweise. Sofern von den Anordnungsvorrichtungen 18 und/oder 24 Zwischenelemente oder Zusatzelemente aufgebracht werden, ist es bevorzugt, dass diese von der zweiten Pulverschicht vollständig überdeckt werden.

Der zweiten Pulverauftragsvorrichtung 26, wiederum in Transportrichtung nachgeordnet ist eine zweite Verbindungseinrichtung 30. Bei dieser im dargestellten Ausführungsbeispiel schematisch angeordneten Verbindungseinrichtung 30 handelt es sich um eine Verbindungsvorrichtung, die gegenüberliegende Heizelemente 31 aufweist. Bei den Heizelementen 31 kann es sich um Wärmeplatten, Wärmestrahler Wärmeöfen oder dergleichen handeln. Den Heizelementen 31 sind in dem dargestellten Ausführungsbeispiel weitere Heizelemente 32 nachgelagert. Bei den Heizelementen 32 handelt es sich vorzugsweise um Heizstempel, die vorzugsweise senkrecht zum Transportband verschiebbar sind. Durch die Heizstempel ist es vorzugsweise möglich gleichzeitig Druck und Wärme zum Aufschmelzen und Herstellen der Versteifungselemente aufzubringen. Im Anschluss werden die Versteifungselemente durch eine Kühleinrichtung 34, die Kühlstempel aufweisen kann, gekühlt.

In Transportrichtung nach der zweiten Pulverauftragsvorrichtung 26 können eine oder mehrere Verdichtungs- und/oder Kalibriereinrichtungen vorgesehen sein. Diese können zwischen den Heizelementen 30, 32 und dem Kühlelement 34, vor diesen Elementen oder in Kombination mit den entsprechenden Elementen angeordnet sein.

Die auf der Oberseite des Transportbandes 12 angeordneten Versteifungselemente fallen in einem Bereich 36 auf ein zweites, vertikal unter dem Transportband 12 angeordnetes Transportband 38. Mit Hilfe einer Beschriftungseinrichtung 40, wie einem Laserprinter, können Artikelnummer oder dergleichen auf die Versteifungselemente aufgebracht werden. Hieran anschließend kann mit Hilfe eines Metalldetektors ein Bestimmen der hergestellten Versteifungselemente erfolgen, die sodann in einen Transportbehälter 44 fallen.

In diesem Bereich kann ferner eine Programmiereinrichtung für programmierbare in den Versteifungselementen angeordneten Zwischenelementen vorgesehen sein. Des Weiteren kann hier eine Sortiereinrichtung, eine Verpackungseinrichtung und dergleichen angeordnet sein.

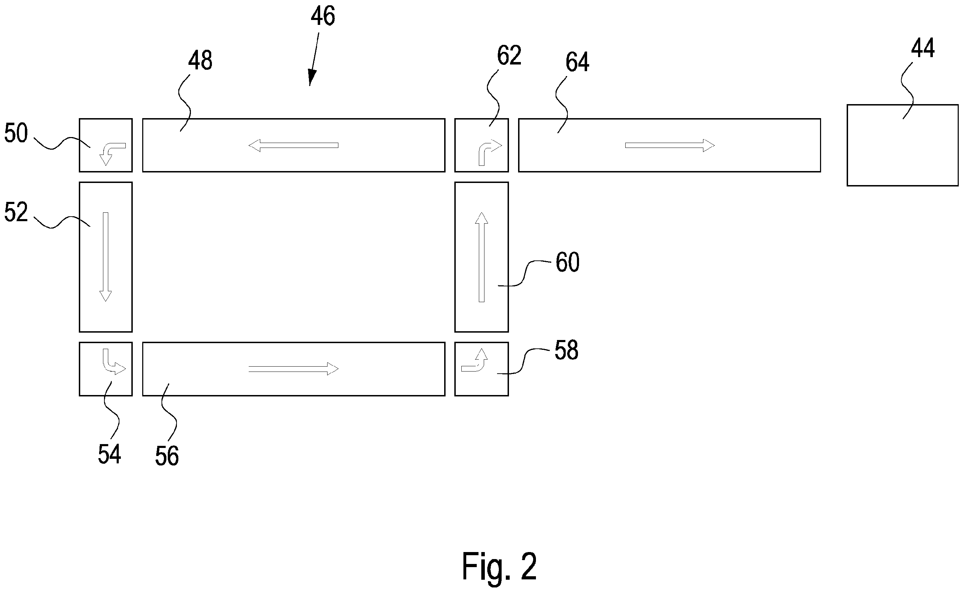

Bei einer alternativen in Figur 2 schematisch in Draufsicht dargestellten Ausführungsform sind die in Figur 1 dargestellten einzelnen Stationen ebenfalls vorhanden, jedoch anders angeordnet. In einem Abschnitt 46 ist als Teil eines Bereitstellungselements ein Transportband 48 angeordnet. Über diesem sind in dem Bereich 46 von rechts nach links nacheinander bzw. in Transportrichtung die erste Pulverauftragsvorrichtung 10, die Anordnungsvorrichtung 18, die erste Verbindungseinrichtung 20, die Anordnungsvorrichtung 28 sowie die zweite Verbindungseinrichtung 30 angeordnet. Die Verbindungseinrichtung 30 umfasst entsprechend den mit Fig. 1 dargestellten Ausführungen vorzugsweise wiederum Heizelemente 31, wie bspw. einen Heizofen, und Heizelemente 32, wie bspw. Heizstempel. Mit Hilfe eines sich an das Transportband 48 anschließenden Umlenkelements 50 werden die produzierten Versteifungselemente in der dargestellten Weise umgeleitet und auf ein weiteres Transportband 52 gefördert. Im Bereich des Transportbandes 52 ist sodann die zweite Verbindungseinrichtung 30 angeordnet. Von einem weiteren Umlenkelement 54 werden die Versteifungselemente auf ein Transportband 46 umgelenkt. In diesem Bereich ist die Kühleinrichtung 34 angeordnet. Anstelle der Kühleinrichtung 34 kann hier eine weitere Heizeinrichtung vorgesehen sein. Über das hieran anschließende Umlenkelement 58 erfolgt ein Umlenken der Versteifungselemente auf ein weiteres Transportband 60, wobei im Bereich des Transportbandes 60 je nach Ausgestaltung die Kühleinrichtung 34 oder ggf. eine weitere Kühleinrichtung vorgesehen sein kann. Über ein weiteres Umlenkelement 62 erfolgt der Transport der Versteifungselemente auf ein Transportband 64, das dem Transportband 38 entspricht und in dessen Bereich die Beschriftungseinheiten 40 und die Detektionseinrichtung 42 angeordnet sein können. Die Versteifungselemente werden sodann in den Behälter 44 gefördert.

## Patentansprüche

1. Vorrichtung zur Herstellung von Versteifungselementen insbesondere für Schuhe, Taschen oder orthopädische Anwendungen, mit
einer ersten Pulverauftragsvorrichtung (10) mit einem ersten Pulverbehälter für eine zumindest teilweise schmelzbare Pulvermischung zum Bereitstellen einer Pulvermischung auf einem Bereitstellungselement (12) und einer an einem Auslass (14) des Pulverbehälters vorgesehenen Schablone zur Festlegung einer Grundform eines herzustellenden Versteifungselements,
einer der ersten Pulverauftragsvorrichtung (10) nachgelagerten ersten Verbindungseinrichtung (20) zum Verbinden der auf dem Bereitstellungselement (12) in der Grundform vorgesehenen Pulvermischung,
einer der ersten Verbindungseinrichtung (20) nachgelagerten zweiten Pulverauftragsvorrichtung (26) mit einem zweiten Pulverbehälter für eine zumindest teilweise schmelzbare Pulvermischung, zum Bereitstellen einer Pulvermischung zumindest teilweise auf der Grundform mittels einer am Auslass (28) des zweiten Pulverbehälters vorgesehenen Schablone zur Festlegung einer vorläufigen Endform eines herzustellenden Versteifungselements und
einer der zweiten Pulverauftragsvorrichtung (26) nachgelagerten zweiten Verbindungseinrichtung (30) zum Verbinden der auf dem Bereitstellungselement (12) in der vorläufigen Endform vorgesehenen Pulvermischung,
**dadurch gekennzeichnet, dass**
zwischen der ersten Pulverauftragsvorrichtung (10) und der ersten Verbindungseinrichtung (20) und/oder zwischen der ersten Verbindungseinrichtung (20) und der zweiten Pulverauftragsvorrichtung (26) eine Anordnungsvorrichtung (18) zur Anordnung von Zwischenelementen wie Speicherelemente, elektronische Bauteile, textile Armierungen, Textilien, Gewebe, Gewirke, Gestricke, Vliesstoffe, Folien, Platten, Gitterstrukturen, 3-D-Gitter oder dergleichen vorgesehen ist.

2. Vorrichtung zur Herstellung von Versteifungselementen nach Anspruch 1, **dadurch gekennzeichnet, dass** die erste und/oder die zweite Verbindungseinrichtung (20, 30) Heizelemente zum zumindest teilweisen Aufschmelzen der Pulvermischung aufweist.

3. Vorrichtung zur Herstellung von Versteifungselementen nach Anspruch 1 oder 2, **dadurch gekennzeichnet, dass** die Zwischenelemente derart ausgebildet sind, dass eine Pulvermischung beim Aufschmelzen in Zwischenräume der Zwischenelemente eindringt.

4. Vorrichtung zur Herstellung von Versteifungselementen nach einem der Ansprüche 1 - 3, **dadurch gekennzeichnet, dass** zwischen der ersten Verbindungseinrichtung (20) und der zweiten Pulverauftragsvorrichtung (26) und/oder zwischen der ersten Pulverauftragsvorrichtung (10) und der ersten Verbindungseinrichtung (20) eine Anordnungsvorrichtung (24) zur Anordnung von Zusatzelementen wie Speicherelementen vorgesehen ist.

5. Vorrichtung zur Herstellung von Versteifungselementen nach einem der Ansprüche 1 - 4, **dadurch gekennzeichnet, dass** die zweite Verbindungseinrichtung (30) Heizelemente (31) wie einen Heizofen und/oder Heizelemente (32), wie Heizstempel aufweist, die vorzugsweise die Endform der Versteifungselemente festlegt.

6. Vorrichtung zur Herstellung von Versteifungselementen nach einem der Ansprüche 1 - 5, **dadurch gekennzeichnet, dass** das Bereitstellungselement (12) ein Förderband aufweist.

7. Vorrichtung zur Herstellung von Versteifungselementen nach einem der Ansprüche 1 - 6, **dadurch gekennzeichnet, dass** der zweiten Verbindungseinrichtung (30) Verdichtungs- und/oder Kalibriereinrichtung und/oder eine Kühleinrichtung (34) nachgelagert ist, die vorzugsweise Kühlstempel aufweist.

8. Vorrichtung zur Herstellung von Versteifungselementen nach Anspruch 7, **dadurch gekennzeichnet, dass** die Verdichtungs- und/oder Kalibriereinrichtung und das Heizelement (31) der zweiten Verbindungseinrichtung (30) als Einheit ausgebildet sind und/oder dass die Verdichtungs- und/oder Kalibriereinrichtung und die Kühleinrichtung (34) als Einheit ausgebildet sind.

9. Vorrichtung zur Herstellung von Versteifungselementen nach einem der Ansprüche 1 - 8, **dadurch gekennzeichnet, dass** der zweiten Verbindungseinrichtung (30) und insbesondere der Kühleinrichtung (34) nachgelagert eine Beschichtungseinrichtung und/oder eine Metall-Detektionseinrichtung angeordnet ist.

10. Vorrichtung zur Herstellung von Versteifungselementen nach einem der Ansprüche 1 - 9, **dadurch gekennzeichnet, dass** der zweiten Verbindungseinrichtung (30) und insbesondere der Kühleinrichtung (34) nachgelagert eine Programmiereinrichtung zur Programmierung von durch eine der Anordnungsvorrichtungen (18, 24) angeordneten programmierbaren Zwischenelementen vorgesehen ist.

11. Vorrichtung zur Herstellung von Versteifungselementen nach einem der Ansprüche 1 - 10, **dadurch gekennzeichnet, dass** die einzelnen Stationen der Vorrichtung linear hintereinander angeordnet sind.

12. Vorrichtung zur Herstellung von Versteifungselementen nach einem der Ansprüche 1 - 11, **dadurch gekennzeichnet, dass** die einzelnen Stationen der Vorrichtung teilweise in einem Winkel zueinander und/oder einander gegenüberliegend angeordnet sind.

## Claims

1. An apparatus for producing reinforcement elements, in particular for shoes, bags or orthopedic applications, comprising
a first powder application apparatus (10) having a first powder container for an at least partially meltable powder mixture, for providing a powder mixture on a feeding device (12) and, provided at an outlet (14) of the powder container, a template for defining a basic shape of a reinforcing element to be produced,
a first compounding means (20) arranged downstream of the first powder application apparatus (10) for compounding the powder mixture provided in the basic shape on the feeding device (12),
a second powder application apparatus (26) arranged downstream of the first compounding means (20) and having a second powder container for an at least partially meltable powder mixture, for providing a powder mixture at least partially on the basic shape with the aid of a template provided at an outlet (28) of the second powder container for defining a preliminary final shape of a reinforcing element to be produced, and
a second compounding means (30) arranged downstream of the second powder application apparatus (26) for compounding the powder mixture provided in the preliminary final shape on the feeding device (12),
**characterized in that**
between the first powder application apparatus (10) and the first compounding means (20) and/or between the first compounding means (20) and the second powder application apparatus (26), an arrangement apparatus (18) for arranging intermediate elements, such as storage elements, electronic components, fabric, textile fabric, 3D-grids or the like, are provided.

2. The apparatus for producing reinforcing elements according to claim 1, **characterized in that** the first and/or the second compounding means (20, 30) comprise heating devices for at least partially melting the powder mixture.

3. The apparatus for producing reinforcing elements according to claim 1 to 2, **characterized in that** the intermediate elements are configured such that a powder mixture penetrates interspaces of the intermediate elements during the melting process.

4. The apparatus for producing reinforcing elements according to any one of claims 1-3, **characterized in that** between the first compounding means (20) and the second powder application apparatus (26) and/or between the first powder application apparatus (10) and the first compounding means (20) an arrangement apparatus (24) for arranging additional elements, such as storage elements, is provided.

5. The apparatus for producing reinforcing elements according to any one of claims 1-4, **characterized in that** the second compounding means (30) comprises heating devices (31), such as a heating furnace, and/or heating devices (32), such as heating dies, and preferably defines the final shape of the reinforcing elements.

6. The apparatus for producing reinforcing elements according to any one of claims 1-5, **characterized in that** the feeding device (12) comprises a conveyor belt.

7. The apparatus for producing reinforcing elements according to any one of claims 1-6, **characterized in that**, downstream of the second compounding means (30), compressing and/or calibrating means and/or a cooling means (34), which preferably comprises cooling dies, are arranged.

8. The apparatus for producing reinforcing elements according to claim 7, **characterized in that** the compressing and/or calibrating means and the heating device (31) of the second compounding means (30) are configured as a unit, and/or that the compressing and/or calibrating means and the cooling means (34) are configured as a unit.

9. The apparatus for producing reinforcing elements according to any one of claims 1-8, **characterized in that** downstream of the second compounding means (30) and in particular the cooling means (34) a coating means and/or a metal detection means are arranged.

10. The apparatus for producing reinforcing elements according to any one of claims 1-9, **characterized in that** downstream of the second compounding means (30) and in particular the cooling means (34) a programming means for programming programmable intermediate elements arranged by one of the arrangement apparatus (18, 24) is provided.

11. The apparatus for producing reinforcing elements according to any one of claims 1-10, **characterized in that** the individual stations of the apparatus are linearly arranged in series.

12. The apparatus for producing reinforcing elements according to any one of claims 1-11, **characterized in that** the individual stations of the apparatus are partially arranged at an angle to each other and/or opposite each other.

## Revendications

1. Dispositif permettant de produire des éléments de renforcement, en particulier pour des chaussures, des poches ou des applications orthopédiques, comprenant
un premier dispositif d'application de poudre (10), comportant un premier réservoir de poudre destiné à un mélange de poudre au moins partiellement fusible permettant de mettre à disposition un mélange de poudre sur un élément de préparation (12), et un gabarit prévu au niveau d'une sortie (14) du réservoir de poudre et permettant de déterminer une forme de base d'un élément de renforcement à produire,
un premier dispositif de liaison (20) situé en aval du premier dispositif d'application de poudre (10) et permettant de lier le mélange de poudre prévu dans la forme de base sur l'élément de préparation (12),
un second dispositif d'application de poudre (26) situé en aval du premier dispositif de liaison (20), comportant un second réservoir de poudre destiné à un mélange de poudre au moins partiellement fusible, permettant de mettre à disposition un mélange de poudre au moins partiellement sur la forme de base au moyen d'un gabarit prévu au niveau de la sortie (28) du second réservoir de poudre afin de déterminer une forme finale préliminaire d'un élément de renforcement à produire et
un second dispositif de liaison (30) situé en aval du second dispositif d'application de poudre (26) et permettant de lier le mélange de poudre prévu sur l'élément de préparation (12) dans la forme finale préliminaire,
**caractérisé en ce que**
entre le premier dispositif d'application de poudre (10) et le premier dispositif de liaison (20) et/ou entre le premier dispositif de liaison (20) et le second dispositif d'application de poudre (26) est prévu un dispositif d'ordonnancement (18) permettant d'implanter des éléments intermédiaires tels que des éléments de stockage, des composants électroniques, des armatures textiles, des textiles, des tissus, des tricots, des tissus tricotés, des tissus non tissés, des films, des plaques, des structures en treillis, des treillis en 3D ou équivalents.

2. Dispositif permettant de produire des éléments de renforcement selon la revendication 1, **caractérisé en ce que** le premier et/ou le second dispositif de liaison (20, 30) présente(nt) des éléments chauffants permettant de faire fondre au moins partiellement le mélange de poudre.

3. Dispositif permettant de produire des éléments de renforcement selon la revendication 1 ou 2, **caractérisé en ce que** les éléments intermédiaires sont conçus de telle manière qu'un mélange de poudre pénètre dans les interstices des éléments intermédiaires lors de la fusion.

4. Dispositif permettant de produire des éléments de renforcement selon l'une des revendications 1 à 3, **caractérisé en ce qu'**un dispositif d'ordonnancement (24), permettant d'implanter des éléments supplémentaires tels que des éléments de stockage, est prévu entre le premier dispositif de liaison (20) et le second dispositif d'application de poudre (26) et/ou entre le premier dispositif d'application de poudre (10) et le premier dispositif de liaison (20).

5. Dispositif permettant de produire des éléments de renforcement selon l'une des revendications 1 à 4, **caractérisé en ce que** le second dispositif de liaison (30) présente des éléments chauffants (31) tels qu'un four de chauffage et/ou des éléments chauffants (32) tels que des poinçons chauffants, qui déterminent de manière préférée la forme finale des éléments de renforcement.

6. Dispositif permettant de produire des éléments de renforcement selon l'une des revendications 1 à 5, **caractérisé en ce que** l'élément de préparation (12) présente une bande transporteuse.

7. Dispositif permettant de produire des éléments de renforcement selon l'une des revendications 1 à 6, **caractérisé en ce qu'**un dispositif de compactage et/ou de finition par frappe et/ou un dispositif de refroidissement (34), présentant de manière préférée un poinçon de refroidissement, est/sont situé(s) en aval du second dispositif de liaison (30).

8. Dispositif permettant de produire des éléments de renforcement selon la revendication 7, **caractérisé en ce que** le dispositif de compactage et/ou de finition par frappe et l'élément chauffant (31) du second dispositif de liaison (30) sont réalisés de manière à former une unité et/ou **en ce que** le dispositif de compactage et/ou de finition par frappe et le dispositif de refroidissement (34) sont réalisés de manière à former une unité.

9. Dispositif permettant de produire des éléments de renforcement selon l'une des revendications 1 à 8, **caractérisé en ce qu'**un dispositif de revêtement et/ou un dispositif de détection de métal est/sont implanté(s) en aval du second dispositif de liaison (30) et en particulier en aval du dispositif de refroidissement (34).

10. Dispositif permettant de produire des éléments de renforcement selon l'une des revendications 1 à 9, **caractérisé en ce qu'**un dispositif de programmation, permettant de programmer des éléments intermédiaires programmables implantés par le biais de l'un des dispositifs d'ordonnancement (18, 24), est prévu en aval du second dispositif de liaison (30), et en particulier en aval du dispositif de refroidissement (34).

11. Dispositif permettant de produire des éléments de renforcement selon l'une des revendications 1 à 10, **caractérisé en ce que** les différentes stations du dispositif sont agencées de manière linéaire les unes derrière les autres.

12. Dispositif permettant de produire des éléments de renforcement selon l'une des revendications 1 à 11, **caractérisé en ce que** les différentes stations du dispositif sont agencées en partie de manière à former un angle les unes par rapport aux autres et/ou en face les unes des autres.
